# EUROPEAN PATENT SPECIFICATION

(11) **EP 3 740 961 B1**
(45) Date of publication and mention of the grant of the patent: **21.12.2022**
(21) Application number: 19704045.4
(22) Date of filing: 14.01.2019
(51) Int. Cl.: H01H 31/00, B61C 3/00, H01H 33/666, H02B 13/045, H01H 33/24, H01H 33/662

(54) **ELECTRICAL SWITCHING DEVICE**
ELEKTRISCHE SCHALTVORRICHTUNG
DISPOSITIF DE COMMUTATION ÉLECTRIQUE

(30) Priority: 15.01.2018 EP 18151668
(43) Date of publication of application: 25.11.2020
(73) Proprietor: Sécheron SA, 1242 Satigny (CH)
(72) Inventor: LAMARA, Tarek, 1232 Confignon (CH); FISCHER, Björn, 1182 Gilly (CH); TRICARICO, Claudio, 1260 Nyon (CH); WASILEWSKI, Martin, 1350 Orbe (CH)
(74) Representative: Micheli & Cie SA
(86) International application number: PCT/IB2019/050256
(87) International publication number: WO 2019/138383

(56) References cited:
- EP-A1- 2 781 382
- EP-A1- 2 873 549
- EP-A1- 3 026 689
- EP-A1- 3 147 924
- JP-A- 2017 208 870
- US-A1- 2017 288 379

## Description

The present invention relates to an electrical switching device, in particular a switchgear, suitable for railway applications and more generally for high or medium voltage circuits.

A switchgear is an electrical apparatus which includes switching and protecting components such as circuit breakers, disconnectors, earthing switches, surge arresters, fuses and various associated equipment (voltage sensors, current sensors, etc.). Switchgears are disclosed e.g. in EP 2048682 and EP 1245066.

Generally, a switchgear includes at least a circuit breaker, a disconnector and an earthing switch. Its function is to switch, control and protect the electrical circuit in which it is placed.

In the railway field, switchgears are found notably in railway substations and on the roof of trains. Switchgears placed on the roof of trains are exposed to harsh working and environmental conditions which may deteriorate their operation. Moreover, a very small vertical space is available for the switchgear on the roof of the train due to the will of maximizing the space inside the train and to the need to respect a clearance under the contact line.

EP 3147924 discloses a switchgear comprising, inside a case, a vacuum interrupter, bushing conductors respectively connected to the fixed electrode and to the movable electrode of the vacuum interrupter and extending perpendicularly to the vacuum interrupter, a solid insulator such as epoxy resin moulded on the vacuum interrupter and bushing conductors and an arrester connected to an electrical connection part on the fixed electrode side.

The present invention aims at providing an electrical switching device, in particular a switchgear, that is compact, robust and little sensitive to environmental conditions, that ensures reliable electrical insulation within the device and that offers modularity.

To this end, the invention proposes an electrical switching device according to claim 1.

Other features and advantages of the present invention will be apparent upon reading the following detailed description made with reference to the appended diagrammatic drawings in which:
- figure 1 is a perspective top view of the exterior of an electrical switching device according to the invention;
- figure 2 is a perspective top view of the electrical switching device, in which a top wall has been removed to show the interior of the device;
- figure 3 is a sectional view of the electrical switching device along a longitudinal axis thereof;
- figures 4a and 4b are top views of two different embodiments of an insulating structure of the electrical switching device;
- figure 5 is a sectional view of the electrical switching device along a direction perpendicular to the longitudinal axis;
- figures 6a to 6d show different configurations of the insulating structure;
- figure 7 is a sectional view taken in the plane of the electrical switching device;
- figure 8 is a sectional view of a variant of the electrical switching device along a longitudinal axis thereof; and
- figure 9 is a perspective view showing a variant of the insulating structure.

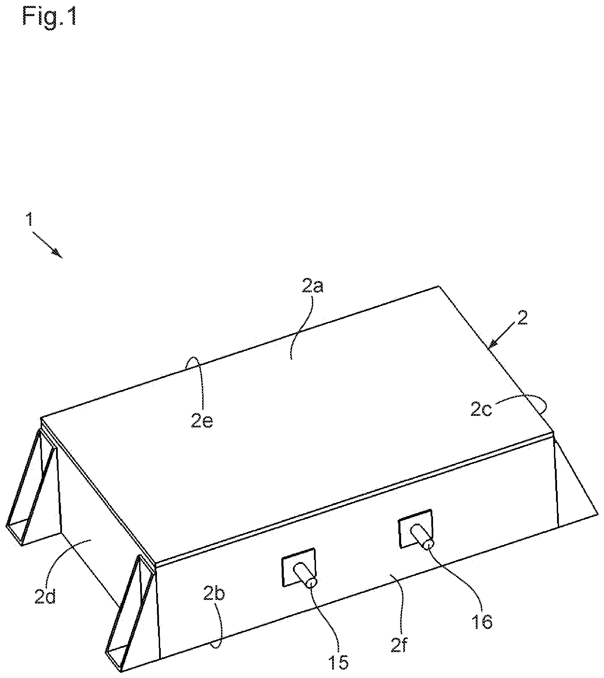

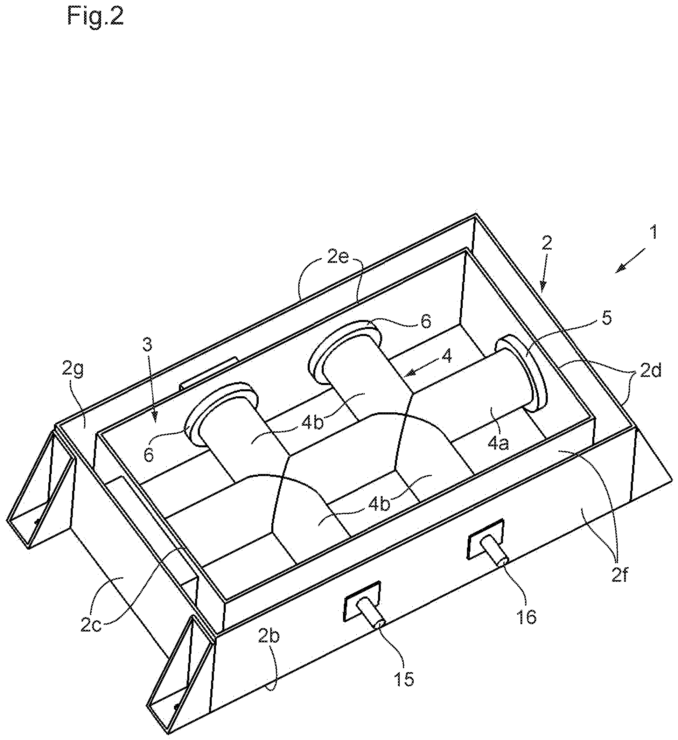

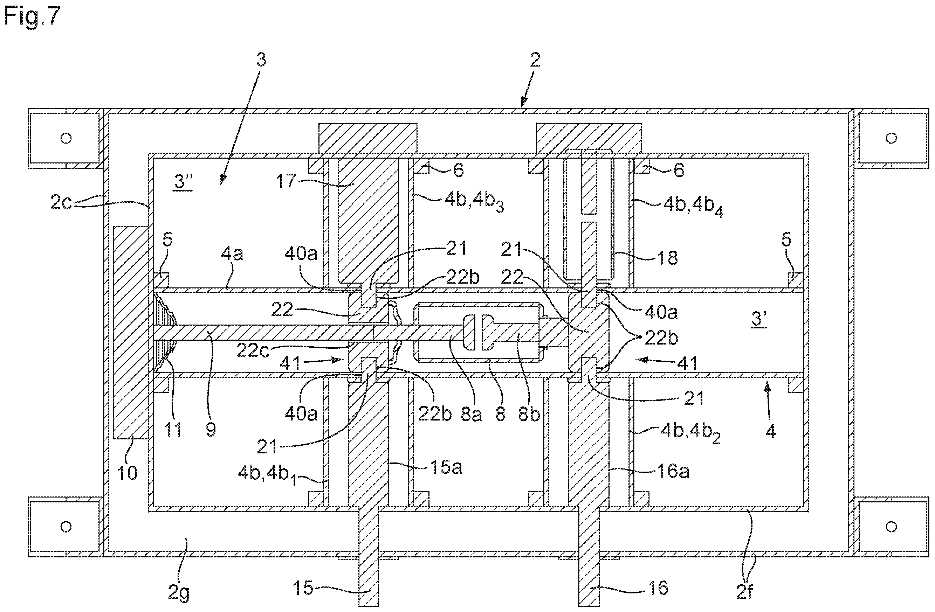

In figures 1 to 3 is shown an electrical switching device 1 according to the present invention for high or medium voltages. The electrical switching device 1 comprises an enclosure 2 made of an electrically conductive material, typically a metallic material (metal or alloy). In use the conductive enclosure 2 is grounded so that there is no electrical field at its outer surface. The conductive enclosure 2 has the general shape of a rectangular parallelepiped and has a top wall 2a, a bottom wall 2b and side walls 2c, 2d, 2e, 2f which together define a sealed internal space 3. In the said sealed internal space 3 is mounted an electrically insulating structure 4 comprising a main tube 4a and auxiliary tubes 4b. The main tube 4a and the auxiliary tubes 4b are rigid. The main tube 4a extends in a longitudinal direction of the conductive enclosure 2 from the side wall 2c to the opposite side wall 2d. Each auxiliary tube 4b extends perpendicularly to the longitudinal direction of the conductive enclosure 2 from one of the side walls 2e, 2f to the main tube 4a. The inside of each auxiliary tube 4b communicates with the inside of the main tube 4a at the end of the auxiliary tube 4b connected to the main tube 4a. To this effect, the cylindrical wall of the main tube 4a has holes 40a (visible in figure 7). At its two ends the main tube 4a has flanges 5 which are fastened, e.g. screwed or clamped, to the side walls 2c, 2d. At its end farther from the main tube 4a each auxiliary tube 4b has a flange 6 which is fastened, e.g. screwed or clamped, to the corresponding side wall 2e or 2f. The insulating structure 4 is thus supported by the conductive enclosure 2 at a non-zero distance from the top wall 2a and the bottom wall 2b.

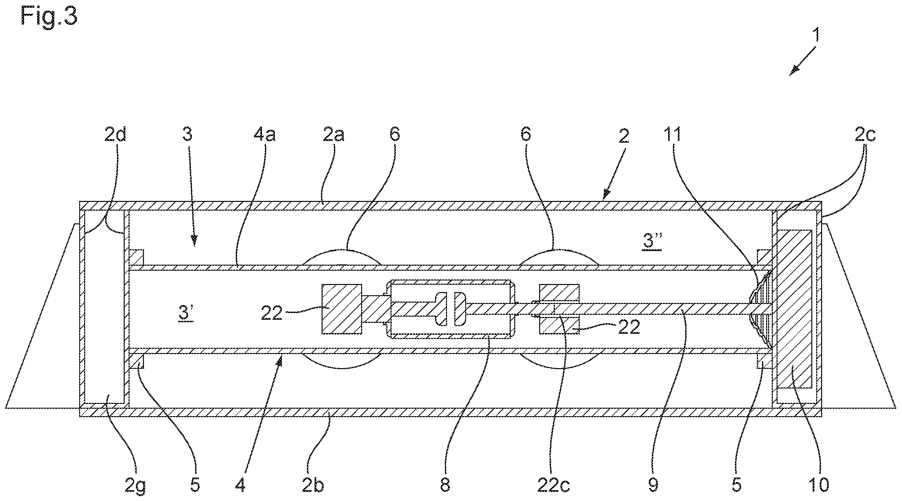

Each of the four side walls 2c, 2d, 2e, 2f is hollow, e.g. its section is U-shaped and is closed by the top wall 2a as shown in figure 3, so as to define together a sealed peripheral compartment 2g which surrounds, and is separate from, the sealed internal space 3. The sealed peripheral compartment 2g accommodates the low-voltage electronics (actuators, electronic control, auxiliary contacts, etc.) of the electrical switching device 1. The sealed internal space 3 accommodates medium or high voltage components.

The tubes 4a, 4b are made of a lightweight but mechanically strong insulating material such as a fiberglass composite material. The flanges 5, 6 are typically metallic and glued, or fixed in another way, on the insulating material.

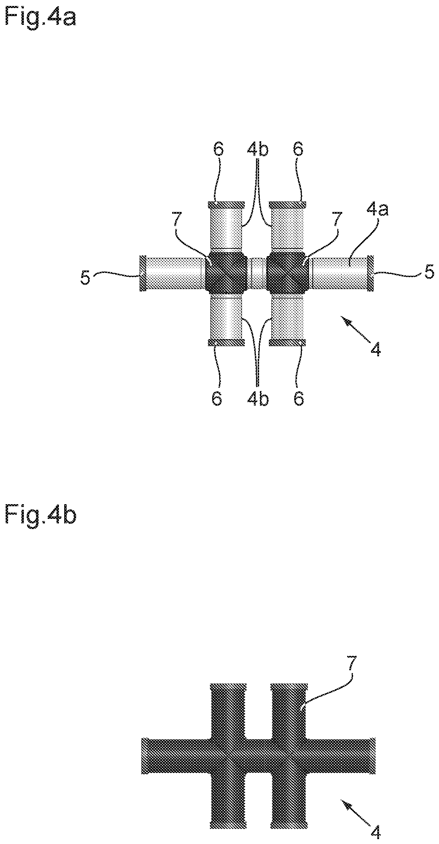

Preferably, the auxiliary tubes 4b are flexibly joined to the main tube 4a by overmoulding a soft polymer 7 like silicone or polyurethane. The soft polymer 7 may be overmoulded only in the zones where the tubes 4a, 4b are joined, as shown in figure 4a, or alternatively on the whole external surface of the tubes 4a, 4b (not including the flanges 5, 6), as shown in figure 4b. The latter alternative is preferred because it increases the insulation strength and avoids the creation of triple junctions air (gas) - insulating material - overmoulded polymer which could constitute dielectric weak points. The softness or stiffness of the flexible connection between the main tube 4a and the auxiliary tubes 4b can be chosen in such a way to make the insulating structure 4 more resistant to shocks and vibrations.

In a variant, however, the overmoulded polymer 7 may be a rigid polymer like epoxy which rigidly joins the auxiliary tubes 4b to the main tube 4a. Alternative means for rigidly joining the auxiliary tubes 4b to the main tubes 4a may of course be used, like gluing for example. In another variant, the insulating structure 4 with its main tube 4a and its auxiliary tubes 4b is made from a single piece.

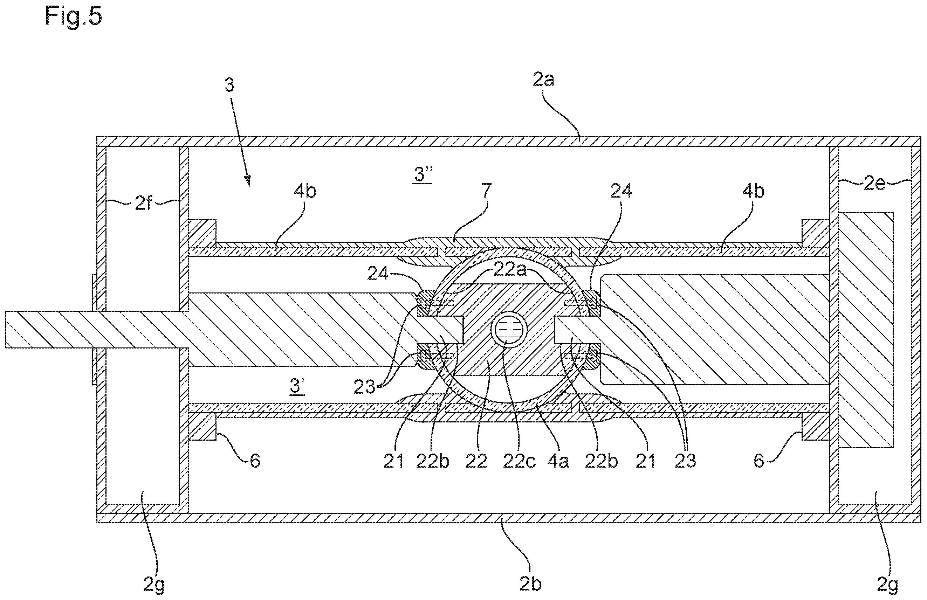

Typically, when overmoulding is used to join the auxiliary tubes 4b to the main tube 4a, the polymer 7 is moulded on both the external surface and the internal surface of the auxiliary tubes 4b in the junction zones and fills interstices between the auxiliary tubes 4b and the main tube 4a, as visible in figure 5.

The conductive enclosure 2 is lightweight too. Its material may be chosen depending on the insulating structure 4. For an insulating structure 4 having flexible junctions between the tubes 4a, 4b, the conductive enclosure 2 should ensure the mechanical rigidity of the device 1, to act as a mechanical support for the whole device. Each wall 2a, 2b, 2c, 2d, 2e, 2f of the conductive enclosure 2 or some of them may thus consist of a sandwich structure comprising a honeycomb metallic or non-metallic panel between two sheets at least one of which is metallic or electrically conductive. Such a sandwich structure is particularly suitable for the top and bottom walls 2a, 2b. Instead of the honeycomb, a metallic corrugated structure, a metallic foam or metallic porous material may be used. For an insulating structure 4 having rigid junctions between the tubes 4a, 4b, the conductive enclosure 2 may be more flexible. Each wall 2a, 2b, 2c, 2d, 2e, 2f of the conductive enclosure 2 may then consist of a metallic sheet or of a non-metallic sheet coated with a metallic layer. In each of the above cases, the metallic material for the conductive enclosure 2 may be aluminium and the walls 2a, 2b, 2c, 2d, 2e, 2f may be assembled by gluing, for example.

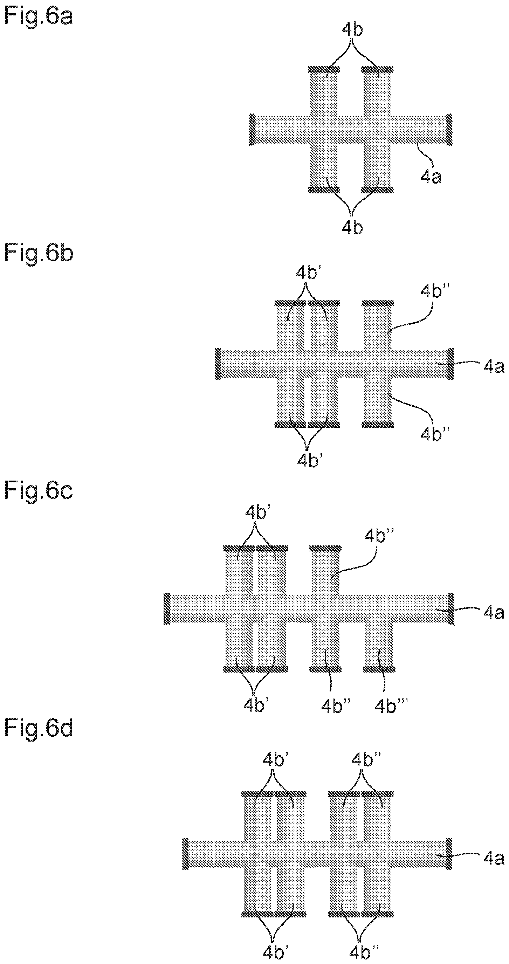

As illustrated in figure 6, the number and positions of the auxiliary tubes 4b may vary depending on the need of the user. Figure 6 shows four different configurations by way of example only.

With reference to figures 3 and 7, the main tube 4a typically accommodates the main switching component of the electrical switching device 1, namely a circuit breaker 8 such as a vacuum circuit breaker, and a mechanical control shaft 9 linked to an actuator mechanism 10 for opening and closing operations of the circuit breaker 8. As is well known, a circuit breaker is a switch that can make or break a current under load, even under short-circuit condition. In the illustrated example the actuator mechanism 10 is provided in the sealed peripheral compartment 2g and is connected to the mechanical control shaft 9 located in the sealed internal space 3 via a sealing elastic (polymeric or metallic) interface 11, like a membrane or bellows, provided at the corresponding side wall 2c of the conductive enclosure 2. Alternatively the actuator mechanism 10 could be placed in the sealed internal space 3, at the wall 2c of the conductive enclosure 2.

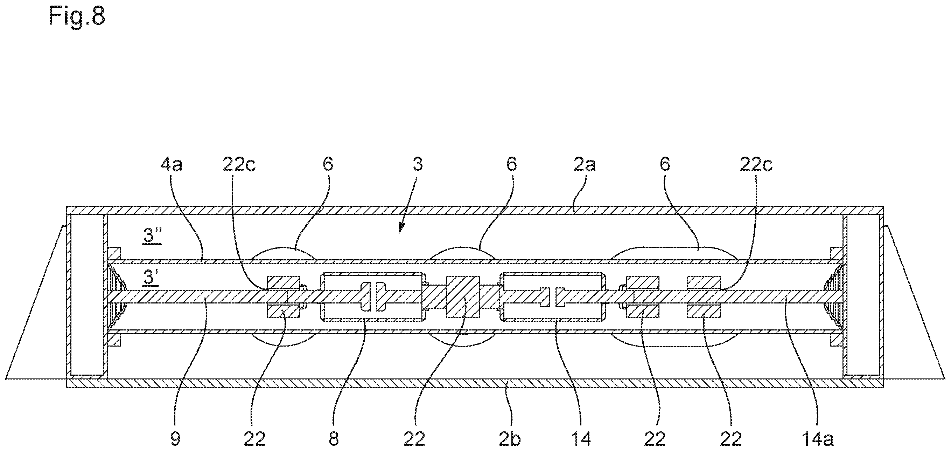

In a variant shown in figure 8 the main tube 4a contains a further switch 14 in series with the circuit breaker 8 and an associated mechanical control shaft 14a. The further switch 14 can be, for example, one of the following switches:
- a disconnector, i.e. a switch that can close and open only under no-load condition;
- a switch disconnector, i.e. a switch with a limited load switching capability, which can make and break current under normal load condition but not under short-circuit condition;
- a load break switch, which can make and break current under normal load condition, can make short-circuit current but cannot break short-circuit current;
- an earthing switch;
- a fuse.

In other variants (not shown), the main tube 4a accommodates a disconnector or another type of switch but no circuit breaker. In addition to a switch, the main tube 4a may contain other components like a surge arrester, a voltage sensor or any other switchgear component.

Each auxiliary tube 4b can accommodate one or more electrical components electrically connected, through a corresponding one of the holes 40a of the main tube 4a, to one pole of the switch(es) located in the main tube 4a. Components which may be mounted in the auxiliary tubes 4b are an earthing switch, a surge arrester, a current sensor and a voltage sensor, for example. One or more auxiliary tubes 4b may also be left empty or may accommodate a box filled with molecular sieve granulates for absorbing moisture and oxygen. Other electrical components that the auxiliary tubes 4b may accommodate are electrical conductors or cables, such as input/output cables for the circuit breaker 8. Figure 7 shows an example of configuration in which a circuit breaker 8 is mounted in the main tube 4a, an input cable 15 crossing the side wall 2f of the conductive enclosure 2 in a sealed manner passes through a first auxiliary tube 4b₁ to be electrically connected to the input pole 8a of the circuit breaker 8, an output cable 16 crossing the side wall 2f in a sealed manner passes through a second auxiliary tube 4b₂ to be electrically connected to the output pole 8b of the circuit breaker 8, an earthing switch 17 is located in a third auxiliary tube 4b₃ and is electrically connected to the input pole 8a of the circuit breaker 8 and a voltage sensor 18 is located in a fourth auxiliary tube 4b₄ and is electrically connected to the output pole 8b of the circuit breaker 8. Preferably, the portion 15a, 16a of the cables 15, 16 situated inside the auxiliary tubes 4b₁, 4b₂ has a rigid or semi-rigid sheath to facilitate its insertion into the tube 4b₁, 4b₂ and its connection to the poles 8a, 8b.

As is visible in figure 7, the zones 41 where the main tube 4a and the auxiliary tubes 4b join correspond, inside the insulating structure 4, to the electrical poles 8a, 8b of the circuit breaker 8 and more generally to electrical poles of the switch(es) mounted in the main tube 4a. Returning now to the different configurations shown in figure 6, two electrical poles are provided in figure 6a, typically the input and output poles of a circuit breaker or a disconnector, and the components inside the auxiliary tubes 4b are each electrically connected to one of these poles. In figure 6b there are two electrical poles, the components inside the auxiliary tubes 4b' are electrically connected to one of these poles and the components inside the auxiliary tubes 4b" are electrically connected to the other of these poles. In figure 6c there are three electrical poles, defined for example by a circuit breaker and a disconnector in series, the components inside the auxiliary tubes 4b' are electrically connected to a first one of these poles, the components inside the auxiliary tube 4b" are electrically connected to a second one of these poles, and the component(s) inside the auxiliary tube 4b'" is(are) electrically connected to a third one of these poles. Finally, in figure 6d two electrical poles are provided, the components inside the auxiliary tubes 4b' are electrically connected to one of these poles and the components inside the auxiliary tubes 4b" are electrically connected to another of these poles.

For their electrical and mechanical connection to the switch(es) inside the main tube 4a, the electrical components inside the auxiliary tubes 4b have identical plugs 21 which can be inserted into corresponding identical sockets 22b, as shown in figure 7. Thus, a great flexibility is offered for mounting, dismounting and interchanging the components in the auxiliary tubes 4b. This modularity leaves the possibility to the end user to choose the desired function or component to be mounted in each tube. The plugs 21 may be simple (cylindrical) plugs as represented, or may be of another type such as multiple-contact or tulip plugs. Likewise, the sockets 22b may be simple (cylindrical) holes as represented, or may be of another type such as multiple-contact or tulip holes.

The switch or switches and any other electrical component located in the main tube 4a are fixed to the main tube 4a. More precisely, for the or each switch a metallic mounting member 22 (see figures 3, 5, 7 and 8) is fixed to each end of the switch and is in electrical contact with the corresponding pole of the switch. The mounting members 22 have lateral curved surfaces 22a (see figure 5) which fit the internal cylindrical surface of the main tube 4a. The mounting members 22 are held by screws 23 which cross corresponding holes in the wall of the main tube 14a and which are screwed in the mounting members 22. The heads of the screws 23 rest in metallic ears 24 which fit the external surface of the main tube 4a so that the wall of the main tube 4a is sandwiched between the ears 24 and the mounting members 22. Such a fixing system is reliable and enables the components in the main tube 4a to be easily mounted and dismounted. Holes 22b provided in the mounting members 22 opposite the holes 40a of the main tube 4a (see figure 7) form the aforementioned sockets by which the electrical components inside the auxiliary tubes 4b can be connected to the switch or switches in the main tube 4a. A central hole 22c (see figures 3, 5, 7 and 8) in the mounting members 22 allows passage of the mechanical control shafts 9, 14a.

As mentioned above, the electrical components inside the auxiliary tubes 4b are held at one of their ends to the switch or switches inside the main tube 4a by the plugs 21 inserted in corresponding sockets 22b. At their other end the electrical components inside the auxiliary tubes 4b are fixed to the conductive enclosure 2, for example by screwing.

It will be appreciated that the electrical switching device 1 according to the invention provides a hybrid air-solid-air insulation both in its plane and perpendicularly to its plane. The air between each electrical component and the tube 4a, 4b which accommodates it, the insulating material forming the tubes 4a, 4b and the air between the tubes 4a, 4b and the conductive enclosure 2 ensure a reliable electrical insulation despite the small size of the electrical switching device 1. Moreover, unlike the components in solid insulated switchgears, the electrical components in the tubes 4a, 4b are removable and interchangeable. Instead of air, another insulating gas or an insulating liquid could be used.

The space 3' inside the tubes 4a, 4b and the space 3" outside the tubes 4a, 4b which together form the sealed internal space 3 may communicate or may be hermetically separated and filled with the same or different fluids. Preferably, to improve the dielectric properties along the life time of the electrical switching device 1, and also to avoid moisture generation and water condensation at the inner surfaces of the tubes 4a, 4b, the insulating structure 4 is hermetically sealed and filled with dry air or another insulation gas. The same may be applied to the space 3" between the insulating structure 4 and the conductive enclosure 2. Indeed, the presence of humidity combined with high electric fields leads usually to the generation of nitric acid. The latter attacks the inner metallic parts, which creates conducting channels along the insulating parts and can provoke flashovers. Additionally, in order to avoid ozone generation (harmful for some insulating materials), nitrogen may be used instead of dry air at least inside the insulating structure 4. The space 3" may also accommodate a box filled with molecular sieve granulates for absorbing moisture and oxygen. A moisture sensor may be provided in the space 3' and/or in the space 3" to monitor moisture. The pressure in the space 3' inside the insulating structure 4 and in the space 3" between the insulating structure 4 and the conductive enclosure 2 can be controlled and varied between 1 and 3 bars to improve the dielectric strength.

One advantage of using the tubes 4a, 4b is that they ensure insulation in any direction perpendicular to them. Another advantage is the intrinsic mechanical strength of a tube. In particular, in addition to its insulation function the main tube 4a serves as a strong mechanical support for the electrical components placed therein, for the auxiliary tubes 4b and for the electrical components placed in the auxiliary tubes 4b.

Moreover it can be shown that there is an optimal insulation distance across the spaces 3' and 3" between the active poles inside the insulating structure 4 and the conductive enclosure 2 which reduces the electrical field to a minimum.

Thanks to the conductive enclosure 2, the electrical switching device 1 of the present invention can ensure reliable switching even under extreme operating and environmental conditions.

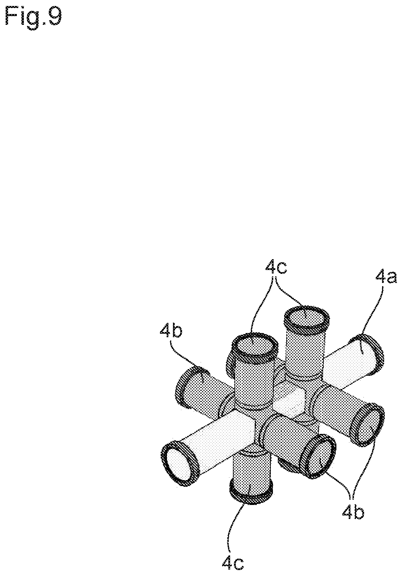

According to one particular application of the present invention, the electrical switching device 1 serves as a medium-voltage switchgear for a railway vehicle and is typically mounted on the roof of a train. The small height of the electrical switching device 1 is a great advantage in this respect. However, in alternative applications where the height is not limited, e.g. in railway electrical substations or in secondary distribution electrical substations, the electrical switching device 1 may further include auxiliary tubes 4c that extend in the height direction as shown in figure 9.

Alternative structures of the electrical switching device 1 according to the invention may include one or more additional insulating tubes parallel to the main tube 4a.

Furthermore, it will be clearly apparent to the skilled person that the auxiliary tubes 4b are not necessarily perpendicular to the main tube 4a but may each extend in a direction that is inclined relative to the direction of the main tube 4a, and that the respective directions of the auxiliary tubes 4b may be identical or different. The same applies to the auxiliary tubes 4c which may extend in one or several directions that are inclined with respect to the plane defined by the main tube 4a and the auxiliary tubes 4b.

## Claims

1. Electrical switching device (1) comprising:
- a conductive enclosure (2),
- a first insulating tube (4a) located inside the conductive enclosure (2),
- at least one switch (8, 14) located inside the first insulating tube (4a),
- several second insulating tubes (4b) located inside the conductive enclosure (2), each second insulating tube (4b) extending in a direction that is different from the direction of the first insulating tube (4a), the inside of each second insulating tube (4b) communicating at one of its two ends with the inside of the first insulating tube (4a), the first insulating tube (4a) and the second insulating tubes (4b) extending along a same plane, and
- several electrical components (15-18) located inside the second insulating tubes (4b) respectively and electrically connected to the at least one switch (8, 14), said electrical components (15-18) or at least two of them having respective different functions,
**characterised in that** the electrical switching device (1) further comprises metallic mounting members (22) fixed respectively to the ends of the at least one switch (8, 14) and electrically connected to the corresponding poles of the at least one switch (8, 14), and **in that** for their electrical and mechanical connection to the at least one switch (8, 14) said electrical components (15-18) have identical plugs (21) adapted to be inserted into corresponding identical sockets (22b) of the metallic mounting members (22), allowing the electrical components (15-18) in the second insulating tubes (4b) to be removable and interchangeable.

2. Electrical switching device according to claim 1, wherein the at least one switch comprises at least one of: a circuit breaker (8), a disconnector (14), a switch disconnector, a load break switch, an earthing switch (17), a fuse.

3. Electrical switching device according to claim 1 or 2, wherein the second insulating tubes (4b) are identical.

4. Electrical switching device according to any of claims 1 to 3, wherein the at least one switch (8, 14) is at a non-zero distance from a cylindrical wall of the first insulating tube (4a) and is separated from said cylindrical wall of the first insulating tube (4a) by a fluid, and/or each electrical component (15-18) is at a non-zero distance from a cylindrical wall of the corresponding second insulating tube (4b) and is separated from said cylindrical wall of the corresponding second insulating tube (4b) by a fluid.

5. Electrical switching device according to any of claims 1 to 4, wherein a fluid separates the first insulating tube (4a) and the second insulating tubes (4b) from the conductive enclosure (2) at least in a direction perpendicular to said plane.

6. Electrical switching device according to any of claims 1 to 5, wherein the conductive enclosure (2) comprises a top wall (2a) and a bottom wall (2b) parallel to said plane, and wherein the first insulation tube (4a) and the second insulating tubes (4b) are at a non-zero distance from each of the top and bottom walls (2a, 2b).

7. Electrical switching device according to any of claims 1 to 6, wherein the second insulating tubes (4b) are rigidly joined to the first insulating tube (4a).

8. Electrical switching device according to any of claims 1 to 6, wherein the second insulating tubes (4b) are flexibly joined to the first insulating tube (4a).

9. Electrical switching device according to any of claims 1 to 8, wherein the second insulating tubes (4b) are joined to the first insulating tube (4a) by an overmoulded material (7).

10. Electrical switching device according to claim 9, wherein the overmoulded material (7) is overmoulded on the whole external surface of the first insulating tube (4a) and of the second insulating tubes (4b).

11. Electrical switching device according to claim 9 or 10, wherein the overmoulded material (7) is a polymer.

12. Electrical switching device according to any of claims 1 to 11, wherein the conductive enclosure (2) is at least partly metallic.

13. Electrical switching device according to any of claims 1 to 12, wherein at least one wall (2a-2f) of the conductive enclosure (2) comprises a honeycomb structure, a metallic corrugated structure, a metallic foam or a metallic porous material.

14. Electrical switching device according to any of claims 1 to 13, wherein the first insulating tube (4a) and the second insulating tubes (4b) are made of a fiberglass composite material.

15. Electrical switching device according to any of claims 1 to 14, wherein the at least one switch (8) is fixed to the wall of the first insulating tube (4a) by means of said mounting members (22), which have curved surfaces (22a) that fit the internal surface of the first insulating tube (4a).

16. Electrical switching device according to any of claims 1 to 15, wherein each second insulating tube (4b) extends perpendicularly to the first insulating tube (4a).

17. Electrical switching device according to any of claims 1 to 16, wherein a first one of said electrical components (15-18) is one among an electrical conductor (15; 16), an earthing switch (17), a surge arrester and a sensor (18), and a second one of said electrical components (15-18) is another one among an electrical conductor (15; 16), an earthing switch (17), a surge arrester and a sensor (18).

18. Electrical switching device according to any of claims 1 to 17, further comprising at least one third insulating tube (4c) located inside the conductive enclosure, the or each third insulating tube (4c) extending in a direction that intersects said plane, the inside of the or each third insulating tube (4c) communicating at one of its two ends with the inside of the first insulating tube (4a).

19. Electrical switching device according to any of claims 1 to 18, further comprising molecular sieve granulates inside at least one of said insulating tubes (4a, 4b, 4c) and/or in a space (3") between said insulating tubes (4a, 4b, 4c) and the conductive enclosure (2).

20. Electrical switching device according to any of claims 1 to 19, further comprising a moisture sensor inside at least one of said insulating tubes (4a, 4b, 4c) and/or in a space (3") between said insulating tubes (4a, 4b, 4c) and the conductive enclosure (2).

## Patentansprüche

1. Elektrische Schaltvorrichtung (1), die Folgendes umfasst:
- ein leitfähiges Gehäuse (2),
- ein erstes Isolierrohr (4a), das sich im Inneren des leitfähigen Gehäuses (2) befindet,
- mindestens einen Schalter (8, 14), der sich im Inneren des ersten Isolierrohrs (4a) befindet,
- mehrere zweite Isolierrohre (4b), die sich im Inneren des leitfähigen Gehäuses (2) befinden, wobei jedes zweite Isolierrohr (4b) sich in einer Richtung erstreckt, die sich von der Richtung des ersten Isolierrohrs (4a) unterscheidet, wobei das Innere von jedem zweiten Isolierrohr (4b) an einem seiner zwei Enden mit dem Inneren des ersten Isolierrohrs (4a) verbunden ist, wobei das erste Isolierrohr (4a) und die zweiten Isolierrohre (4b) sich entlang einer gleichen Ebene erstrecken, und
- verschiedene elektrische Bauteile (15 bis 18), die sich jeweils im Inneren der zweiten Isolierrohre (4b) befinden und elektrisch mit dem mindestens einen Schalter (8, 14) verbunden sind, wobei die elektrischen Bauteile (15 bis 18) oder mindestens zwei davon jeweils unterschiedliche Funktionen aufweisen,
**dadurch gekennzeichnet, dass** die elektrische Schaltvorrichtung (1) ferner metallische Montageelemente (22) umfasst, die jeweils an den Enden des mindestens einen Schalters (8, 14) befestigt sind und elektrisch mit den entsprechenden Polen des mindestens einen Schalters (8, 14) verbunden sind, und dadurch, dass für ihre elektrische und mechanische Verbindung mit dem mindestens einen Schalter (8, 14) die elektrischen Bauteile (15 bis 18) identische Stecker (21) aufweisen, die angepasst sind, in entsprechende identische Buchsen (22b) der metallischen Montageelemente (22) eingesetzt zu werden, wodurch ermöglicht wird, dass die elektrischen Bauteile (15 bis 18) in den zweiten Isolierrohren (4b) abnehmbar und miteinander austauschbar sind.

2. Elektrische Schaltvorrichtung nach Anspruch 1, wobei der mindestens eine Schalter mindestens eines von Folgendem umfasst: einen Ausschalter (8), einen Trennschalter (14), einen Schaltertrennschalter, einen Lasttrennschalter, einem Erdungsschalter (17), eine Sicherung.

3. Elektrische Schaltvorrichtung nach Anspruch 1 oder 2, wobei die zweiten Isolierrohre (4b) identisch sind.

4. Elektrische Schaltvorrichtung nach einem der Ansprüche 1 bis 3, wobei der mindestens eine Schalter (8, 14) sich in einem Abstand von ungleich null von einer zylindrischen Wand des ersten Isolierrohrs (4a) befindet und von der zylindrischen Wand des ersten Isolierrohrs (4a) durch ein Fluid getrennt ist, und/oder jedes elektrische Bauteil (15 bis 18) sich in einem Abstand von ungleich null von einer zylindrischen Wand des entsprechenden zweiten Isolierrohrs (4b) befindet und von der zylindrischen Wand des entsprechenden zweiten Isolierrohrs (4b) durch ein Fluid getrennt ist.

5. Elektrische Schaltvorrichtung nach einem der Ansprüche 1 bis 4, wobei ein Fluid das erste Isolierrohr (4a) und die zweiten Isolierrohre (4b) von dem leitfähigen Gehäuse (2) mindestens in einer Richtung senkrecht zu der Ebene trennt.

6. Elektrische Schaltvorrichtung nach einem der Ansprüche 1 bis 5, wobei das leitfähige Gehäuse (2a) eine obere Wand (2a) und eine untere Wand (2b) umfasst, die parallel zu der Ebene sind, und wobei das erste Isolierrohr (4a) und die zweiten Isolierrohre (4b) sich in einem Abstand von ungleich null von jeder von der oberen und der unteren Wand (2a, 2b) befinden.

7. Elektrische Schaltvorrichtung nach einem der Ansprüche 1 bis 6, wobei die zweiten Isolierrohre (4b) starr mit dem ersten Isolierrohr (4a) verbunden sind.

8. Elektrische Schaltvorrichtung nach einem der Ansprüche 1 bis 6, wobei die zweiten Isolierrohre (4b) flexibel mit dem ersten Isolierrohr (4a) verbunden sind.

9. Elektrische Schaltvorrichtung nach einem der Ansprüche 1 bis 8, wobei die zweiten Isolierrohre (4b) durch ein überformtes Material (7) mit dem ersten Isolierrohr (4a) verbunden sind.

10. Elektrische Schaltvorrichtung nach Anspruch 9, wobei das überformte Material (7) über der gesamten äußeren Fläche des ersten Isolierrohrs (4a) und der zweiten Isolierrohre (4b) überformt ist.

11. Elektrische Schaltvorrichtung nach Anspruch 9 oder 10, wobei das überformte Material (7) ein Polymer ist.

12. Elektrische Schaltvorrichtung nach einem der Ansprüche 1 bis 11, wobei das leitfähige Gehäuse (2) zumindest teilweise metallisch ist.

13. Elektrische Schaltvorrichtung nach einem der Ansprüche 1 bis 12, wobei mindestens eine Wand (2a bis 2f) des leitfähigen Gehäuses (2) eine Wabenstruktur, eine gewellte metallische Struktur, einen metallischen Schaum oder ein poröses metallisches Material umfasst.

14. Elektrische Schaltvorrichtung nach einem der Ansprüche 1 bis 13, wobei das erste Isolierrohr (4a) und die zweiten Isolierrohre (4b) aus einem Glasfaser-Verbundmaterial bestehen.

15. Elektrische Schaltvorrichtung nach einem der Ansprüche 1 bis 14, wobei der mindestens eine Schalter (8) mittels der Montageelemente (22), die gekrümmte Flächen (22a) aufweisen, die zu der inneren Oberfläche des ersten Isolierrohrs (4a) passen, an der Wand des ersten Isolierrohrs (4a) befestigt ist.

16. Elektrische Schaltvorrichtung nach einem der Ansprüche 1 bis 15, wobei jedes zweite Isolierrohr (4b) sich senkrecht zu dem ersten Isolierrohr (4a) erstreckt.

17. Elektrische Schaltvorrichtung nach einem der Ansprüche 1 bis 16, wobei ein erstes von den elektrischen Bauteilen (15 bis 18) eines von einem elektrischen Leiter (15; 16), einem Erdungsschalter (17), einem Überspannungsableiter und einem Sensor (18) ist und ein zweites von den elektrischen Bauteilen (15 bis 18) ein anderes von einem elektrischen Leiter (15; 16), einem Erdungsschalter (17), einem Überspannungsableiter und einem Sensor (18) ist.

18. Elektrische Schaltvorrichtung nach einem der Ansprüche 1 bis 17, die ferner mindestens ein drittes Isolierrohr (4c) umfasst, das sich im Inneren des leitfähigen Gehäuses befindet, wobei das oder jedes dritte Isolierrohr (4c) sich in einer Richtung erstreckt, welche die Ebene schneidet, wobei das Innere von dem oder jedem dritten Isolierrohr (4c) an einem seiner zwei Enden mit dem Inneren des ersten Isolierrohrs (4a) verbunden ist.

19. Elektrische Schaltvorrichtung nach einem der Ansprüche 1 bis 18, die ferner Molekularsiebgranulate im Inneren von mindestens einem der Isolierrohre (4a, 4b, 4c) und/oder in einem Raum (3") zwischen den Isolierrohren (4a, 4b, 4c) und dem leitfähigen Gehäuse (2) umfasst.

20. Elektrische Schaltvorrichtung nach einem der Ansprüche 1 bis 19, die ferner einen Feuchtigkeitssensor im Inneren von mindestens einem der Isolierrohre (4a, 4b, 4c) und/oder in einem Raum (3") zwischen den Isolierrohren (4a, 4b, 4c) und dem leitfähigen Gehäuse (2) umfasst.

## Revendications

1. Dispositif de commutation électrique (1) comprenant :
- une enceinte conductrice (2),
- un premier tube isolant (4a) situé à l'intérieur de l'enceinte conductrice (2),
- au moins un commutateur (8, 14) situé à l'intérieur du premier tube isolant (4a),
- plusieurs seconds tubes isolants (4b) situés à l'intérieur de l'enceinte conductrice (2), chaque second tube isolant (4b) s'étendant dans une direction différente de la direction du premier tube isolant (4a), l'intérieur de chaque second tube isolant (4b) communiquant à l'une de ses deux extrémités avec l'intérieur du premier tube isolant (4a), le premier tube isolant (4a) et les seconds tubes isolants (4b) s'étendant le long d'un même plan, et
- plusieurs composants électriques (15-18) situés à l'intérieur des seconds tubes isolants (4b) respectivement et connectés électriquement à l'au moins un commutateur (8, 14), lesdits composants électriques (15-18) ou au moins deux d'entre eux ayant des fonctions respectives différentes,
**caractérisé en ce que** le dispositif de commutation électrique (1) comprend en outre des éléments de montage métalliques (22) fixés respectivement aux extrémités de l'au moins un commutateur (8, 14) et connectés électriquement aux pôles correspondants de l'au moins un commutateur (8, 14), et **en ce que** pour leur connexion électrique et mécanique à l'au moins un commutateur (8, 14), lesdits composants électriques (15-18) ont des fiches identiques (21) adaptées pour être insérées dans des douilles identiques correspondantes (22b) des éléments de montage métalliques (22), permettant aux composants électriques (15-18) dans les seconds tubes isolants (4b) d'être amovibles et interchangeables.

2. Dispositif de commutation électrique selon la revendication 1, dans lequel l'au moins un commutateur comprend au moins un élément parmi : un disjoncteur (8), un sectionneur (14), un interrupteur-sectionneur, un interrupteur coupe-charge, un commutateur de mise à la terre (17), un fusible.

3. Dispositif de commutation électrique selon la revendication 1 ou 2, dans lequel les seconds tubes isolants (4b) sont identiques.

4. Dispositif de commutation électrique selon l'une quelconque des revendications 1 à 3, dans lequel l'au moins un commutateur (8, 14) est à une distance non nulle d'une paroi cylindrique du premier tube isolant (4a) et est séparé de ladite paroi cylindrique du premier tube isolant (4a) par un fluide, et/ou chaque composant électrique (15-18) est à une distance non nulle d'une paroi cylindrique du deuxième tube isolant (4b) correspondant et est séparé de ladite paroi cylindrique du deuxième tube isolant (4b) correspondant par un fluide.

5. Dispositif de commutation électrique selon l'une quelconque des revendications 1 à 4, dans lequel un fluide sépare le premier tube isolant (4a) et les seconds tubes isolants (4b) de l'enceinte conductrice (2) au moins dans une direction perpendiculaire audit plan.

6. Dispositif de commutation électrique selon l'une quelconque des revendications 1 à 5, dans lequel l'enceinte conductrice (2) comprend une paroi supérieure (2a) et une paroi inférieure (2b) parallèles audit plan, et dans lequel le premier tube isolant (4a) et les seconds tubes isolants (4b) sont à une distance non nulle de chacune des parois supérieure et inférieure (2a, 2b).

7. Dispositif de commutation électrique selon l'une quelconque des revendications 1 à 6, dans lequel les seconds tubes isolants (4b) sont liés rigidement au premier tube isolant (4a).

8. Dispositif de commutation électrique selon l'une quelconque des revendications 1 à 6, dans lequel les seconds tubes isolants (4b) sont liés de manière souple au premier tube isolant (4a).

9. Dispositif de commutation électrique selon l'une quelconque des revendications 1 à 8, dans lequel les seconds tubes isolants (4b) sont liés au premier tube isolant (4a) par un matériau surmoulé (7).

10. Dispositif de commutation électrique selon la revendication 9, dans lequel le matériau surmoulé (7) est surmoulé sur la totalité de la surface externe du premier tube isolant (4a) et des seconds tubes isolants (4b).

11. Dispositif de commutation électrique selon la revendication 9 ou 10, dans lequel le matériau surmoulé (7) est un polymère.

12. Dispositif de commutation électrique selon l'une quelconque des revendications 1 à 11, dans lequel l'enceinte conductrice (2) est au moins partiellement métallique.

13. Dispositif de commutation électrique selon l'une quelconque des revendications 1 à 12, dans lequel au moins une paroi (2a-2f) de l'enceinte conductrice (2) comprend une structure alvéolaire, une structure métallique ondulée, une mousse métallique ou un matériau poreux métallique.

14. Dispositif de commutation électrique selon l'une quelconque des revendications 1 à 13, dans lequel le premier tube isolant (4a) et les seconds tubes isolants (4b) sont réalisés dans un matériau composite à fibres de verre.

15. Dispositif de commutation électrique selon l'une quelconque des revendications 1 à 14, dans lequel l'au moins un commutateur (8) est fixé à la paroi du premier tube isolant (4a) au moyen desdits éléments de montage (22), qui présentent des surfaces incurvées (22a) ajustées à la surface interne du premier tube isolant (4a).

16. Dispositif de commutation électrique selon l'une quelconque des revendications 1 à 15, dans lequel chaque deuxième tube isolant (4b) s'étend perpendiculairement au premier tube isolant (4a).

17. Dispositif de commutation électrique selon l'une quelconque des revendications 1 à 16, dans lequel un premier desdits composants électriques (15-18) est l'un parmi un conducteur électrique (15 ; 16), un commutateur de mise à la terre (17), un parafoudre et un capteur (18), et un second desdits composants électriques (15-18) est un autre parmi un conducteur électrique (15 ; 16), un commutateur de mise à la terre (17), un parafoudre et un capteur (18).

18. Appareil de commutation électrique selon l'une quelconque des revendications 1 à 17, comprenant en outre au moins un troisième tube isolant (4c) situé à l'intérieur de l'enceinte conductrice, le ou chaque troisième tube isolant (4c) s'étendant dans une direction sécante audit plan, l'intérieur du ou de chaque troisième tube isolant (4c) communiquant à l'une de ses deux extrémités avec l'intérieur du premier tube isolant (4a).

19. Dispositif de commutation électrique selon l'une quelconque des revendications 1 à 18, comprenant en outre des granulés de tamis moléculaire à l'intérieur d'au moins un desdits tubes isolants (4a, 4b, 4c) et/ou dans un espace (3") entre lesdits tubes isolants (4a, 4b, 4c) et l'enceinte conductrice (2).

20. Dispositif de commutation électrique selon l'une quelconque des revendications 1 à 19, comprenant en outre un capteur d'humidité à l'intérieur d'au moins un desdits tubes isolants (4a, 4b, 4c) et/ou dans un espace (3") entre lesdits tubes isolants (4a, 4b, 4c) et l'enceinte conductrice (2).
